## Europäisches Patentamt

## European Patent Office

## Office européen des brevets

(11) Veröffentlichungsnummer: **0 122 414**
**B1**

(12) # EUROPÄISCHE PATENTSCHRIFT

(45) Veröffentlichungstag der Patentschrift:
04.11.87

(51) Int. Cl.⁴: **H 05 B 1/02**

(21) Anmeldenummer: **84102125.6**

(22) Anmeldetag: **29.02.84**

(54) **Elektrischer Durchlauferhitzer für Haushaltsgeräte, insbesondere Kaffeemaschinen.**

(30) Priorität: **13.04.83 DE 8310976 U**

(43) Veröffentlichungstag der Anmeldung:
**24.10.84 Patentblatt 84/43**

(45) Bekanntmachung des Hinweises auf die Patenterteilung:
**04.11.87 Patentblatt 87/45**

(84) Benannte Vertragsstaaten:
**DE GB**

(56) Entgegenhaltungen:
**DE-A-2 552 625**
**DE-A-2 605 643**
**DE-A-2 610 784**
**DE-A-2 701 692**

(73) Patentinhaber: **ELPAG AG CHUR, Quaderstrasse 11,
CH- 7001 Chur (CH)**

(72) Erfinder: **Bleckmann, Ingo, Dr. Dipl.- Ing., Ignaz-
Rieder- Kau 11, A-5020 Salzburg (AT)**

(74) Vertreter: **Liedl, Gerhard, Steinsdorfstrasse 21 - 22,
D-8000 München 22 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 122 414 B1

## Beschreibung

Die Erfindung betrifft einen elektrischen Durchlauferhitzer für Haushaltsgeräte nach den Merkmalen des Oberbegriffes des Anspruches 1.

Aus der DE-A-2 552 625 ist ein elektrischer Durchlauferhitzer entsprechend den Merkmalen des Oberbegriffes des Anspruches 1 bekannt geworden. Innerhalb eines Wasserrohrbogens ist ein ähnlich geformter Rohrheizkörperbogen angeordnet und zwar auf einem dem Abstellen der Kaffeekanne dienenden Abstellblech. Eine Brücke in Form eines Blechstreifens trägt einen Thermostaten und ist mit ihrem einem Ende zwischen dem Wasserrohr und dem Rohrheizkörper verankert. Weiterhin wird durch Klammern ein Hüllrohr mit einem Innendraht am Rohrheizkörper gehalten. Bei Überhitzung schmilzt der Innendraht, wodurch die Stromzufuhr abgeschaltet wird.

Ein ähnlicher elektrischer Durchlauferhitzer ist in der DE-A-2 701 692 beschrieben. Auch dort sind ein Temperaturregler und eine Temperaturschmelzsicherung vorgesehen, die in der Nähe des Rohrheizkörpers auf der Wärmeleit- bzw. Warmhalteplatte befestigt sind.

Aus der DE-A-2 605 643 ist ein elektrischer Durchflußerhitzer der in Rede stehenden Art bekannt geworden, bei der eine Rohrheizkörperschleife und ein Wasserrohrbogen übereinanderliegend unterhalb einer Warmhalteplatte angeordnet sind. An einer mit dem Durchlauferhitzer verlötete Blechlasche ist ein Zweipunkt-Temperaturregler befestigt. Bei dieser Anordnung soll erreicht werden, daß bei stärkerer Verkalkung eine entsprechende Anzeigelampe aufleuchtet und dementsprechend anzeigt, daß der Durchlauferhitzer entkalkt werden muß.

In jedem Fall soll der dem Durchlauferhitzer zugeordnete Thermostat die Temperatur des im Wasserdurchlaufrohr stehenden Wassers so einregeln, daß einerseits der Dampfdruck ausreicht, um das Wasser über das Steigrohr zwecks Ausfluß auf das Kaffeepulver auszutreiben, daß jedoch andererseits nicht zuviel Dampf mit entsprechender Energievergeudung und einem unangenehmen, schnorchelnden Geräusch gebildet wird. Nach dem Wasserdurchlauf soll der Thermostat so takten, daß die auf der Warmhalteplatte abgestellte Kaffeekanne auf einer Temperatur von etwa 80°C gehalten wird.

Der Erfindung liegt nun die Aufgabe zugrunde, einen elektrischen Durchlauferhitzer der in Rede stehenden Art so auszubilden, daß ein energiesparender und geräuschloser Betrieb der Maschine bei der Kaffeezubereitung erreicht und daß die Kaffeetemperatur in dem abgestellten Kaffeegefäß auf den erwünschten Wert von 80°C gehalten wird.

Die Lösung der angegebenen Aufgabe ergibt sich aus den kennzeichnenden Merkmalen des Hauptanspruches. Die Unteransprüche beschreiben bevorzugte Ausführungsformen.

Die beiliegende Zeichnung dient der weiteren Erläuterung der Erfindung. Es zeigt:

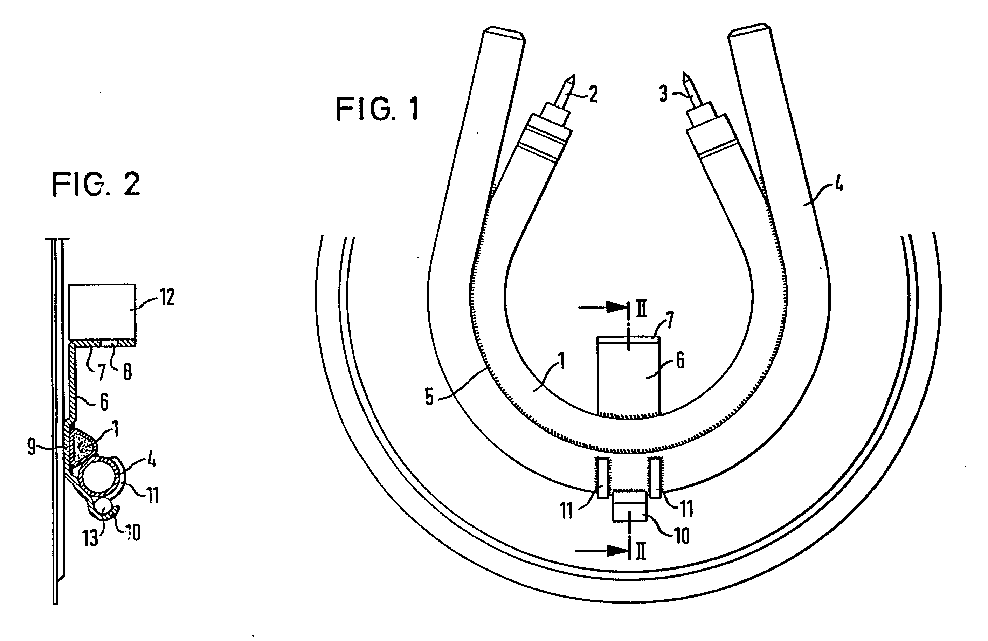

Fig. 1 eine Draufsicht auf den Durchlauferhitzer;
Fig. 2 einen Schnitt längs der Linie II-II in Fig. 1.

Der dargestellte Durchlauferhitzer enthält einen kreisringförmig oder hufeisenförmig gebogenen Rohrheizkörper 1 mit den Anschlußenden 2 und 3. Mit dem Rohrheizkörper 1 ist ein ähnlich gebogenes Wasserdurchlaufrohr 4 vorzugsweise mittels einer Lötnaht 5 verbunden. In der Mitte zwischen den Anschlußenden 2 und 3 ist mit dem Rohrheizkörper und mit dem Wasserdurchlaufrohr 4 eine aus einem Blechstreifen bestehende Brücke 6 verbunden.

Das eine Ende der Brücke 6 ist bei 7 rechtwinklig nach oben abgebogen und besitzt eine Bohrung 8. Weiterhin besitzt die Brücke 6 eine wannenförmige Einsenkung 9, in welche der Rohrheizkörper 1 eingelötet ist. Das dem Ende 7 gegenüberliegende Ende der Brücke 6 ist eingeschnitten, so daß ein aufgebogener Lappen 10 und zwei das Wasserrohr 4 umgreifende, gabelförmige Arme 11 gebildet werden.

Mit dem abgebogenen Ende 7 wird über die Bohrung 8 ein Thermostat 12 mit der Brücke 6 verbunden. In den abgebogenen Lappen 10 wird eine Efensicherung 13 eingeklemmt. Der Thermostat 12 und die Efensicherung 13 liegen unabhängig voneinander in Serie im Stromkreis zu den Anschlußenden 2 und 3 des Rohrheizkörper, und zwar dergestalt, daß der Stromkreis sowohl bei Öffnen des Thermostaten 12 als auch bei Durchbrennen der Efensicherung 13 unterbrochen wird. Bei der Efensicherung 13 handelt es sich um eine Schmelzsicherung, die vom Kundendienst oder vom Herstellerwerk ausgewechselt werden kann.

Die dargestellte Ausführungsform ermöglicht nun überraschenderweise eine Abstimmung der eingangs genannten Temperaturregelungsprobleme. Da der Thermostat 12 unmittelbar unter dem Boden der nicht dargestellten abgestellten Kaffeekanne angeordnet ist, kann er so eingestellt werden, daß der Strom zu den Anschlußenden 2 und 3 des Rohrheizkörpers eingeschaltet wird, wenn die Kaffeetemperatur unter 80°C absinkt. Damit ist die Überwachung der Warmhaltefunktion in optimaler Weise gesichert. Die Länge und Breite der Brücke 6 ist so dimensioniert, daß andererseits bei dieser Einstellung des Thermostaten eine Abschaltung des Stromes zu den Anschlußenden 2 und 3 erfolgt, wenn die Temperatur in der Mitte des Wasserrohres 4 bzw. des Rohrheizkörpers 1 den für die Erhitzung des durchlaufenden Wassers erforderlichen optimalen Wert überschreitet.

Wenn der Rohrheizkörper 1 nach längerer Betriebszeit, z. B. durch Verschlechterung des Isolationswertes, durchbrennt, dann brennt auf alle Fälle die Efensicherung 13 durch, bevor eine Temperatur erreicht wird, bei der der Rohrheizkörpermantel schmilzt oder infolge von Strahlungswärme eine Brandgefahr auftritt. Die Efensicherung ist zwar auf einen höheren Temperaturwert als der Thermostat 12 eingestellt. Da sie jedoch näher am Rohrheizkörper angeordnet ist als der Thermostat 12, ist ein Ansprechen auf alle Fälle sichergestellt. Weiterhin tritt beim Durchbrennen des Rohrheizkörpers im allgemeinen durch die Lichtbogenbildung ein erhöhter Stromfluß auf, auf den der Thermostat 12 selbstverständlich nicht, jedoch die Efensicherung 13 anspricht. Anstelle eines Thermostaten 12 können auch Widerstandselemente mit positivem Temperaturkoeffizienten (sogenannte PTC-Elemente) oder andere temperaturabhängige mechanische oder elektrische Schalteinrichtungen Verwendung finden.

**Patentansprüche**

1. Elektrischer Durchlauferhitzer für Haushaltsgeräte, insbesondere für Kaffeemaschinen, bei dem eine Rohrheizkörperschleife (1) und ein Wasserdurchlaufrohrbogen (4) an einer Warmhalteplatte oder einem Montageblech befestigt sind und bei der eine Brücke (6) in Form eines Blechstreifens vorgesehen ist, welche sowohl mit dem Rohrheizkörper (1) als auch mit dem Wasserdurchlaufrohr (4) Kontakt hat und bei dem als Temperaturbegrenzungseinrichtung mindestens zwei unabhängig voneinander arbeitende Strombegrenzungs- bzw. Sicherungselemente (12, 13) vorgesehen sind; dadurch gekennzeichnet, daß die Brücke (6) den Wasserrohrbogen (4) und die Rohrheizkörperschieife (1) an einer Stelle im Längsverlauf derselben umgreift und daß das ein Strombegrenzungs- bzw. Sicherungselement (12) an dem einen Ende der Brücke (6) und das andere Strombegrenzungs- bzw. Sicherungselement (13) an dem der Wasserrohr-Rohrheizkörperanordnung gegenüberliegenden Seite der Brücke (6) angeordnet sind, ferner daß die Brücke sich in wärmeleitender Verbindung mit dem Abstell- bzw. Montageblech befindet.

2. Durchlauferhitzer nach Anspruch 1, dadurch gekennzeichnet, daß an dem nach innen in die Rohrheizkörper-Wasserdurchlaufrohranordnung abstehendem Ende der Brücke (6) ein Thermostat (12) und an dem nach außen abstehendem Ende der Brücke (6) eine Schmelzsicherung (13) angeordnet sind.

3. Durchlauferhitzer nach Ansprüchen 1 bis 2, dadurch gekennzeichnet, daß die Schmelzsicherung (13) in unmittelbarer Nähe des Rohrheizkörpers (1) und der Thermostat (12) in größerer Entfernung von demselben auf der Brücke (6) angeordnet sind.

4. Durchlauferhitzer nach einem der Ansprüche 1 bis 3, dadurch gekennzeichnet, daß der die Brücke (6) bildende Blechstreifen an der Anordnung aus dem Wasserdurchlaufrohr (4) und dem Rohrheizkörper (1) etwa in der Mitte zwischen den beiden Anschlußenden (2, 3) des Rohrheizkörpers (1) befestigt ist.

**Claims**

1. An electric continuous-flow heater for household appliances, in particular for coffee making machines, wherein a tubular heater loop (1) and a continuous-flow water pipe bend (4) are mounted to a heater plate or a mounting metal sheet, and wherein a bridge member (6) having the form of a sheet metal strip is provided, said bridge member contacting the tubular heater (1) as well as the continuous-flow water pipe (4), and wherein at least two independently operating current-limiting or safety fuses (12, 13) are provided as temperature-limiting means, characterized in that the bridge member (6) engages around the water pipe bend (4) and the tubular heater loop (1) at a position along the length thereof, and that one of said current-limiting or safety fuses (12) is disposed at one end of the bridge (6) and the other current-limiting or safety fuse (13) is disposed at that side of the bridge member which is opposite to the water pipe/tubular heater assembly, and furthermore, that the connection between the bridge member and the setting-down or mounting metal sheet is thermally conducting.

2. A continuous-flow heater according to claim 1, characterized in that a thermostat (12) is disposed at the end of the bridge member (6) projecting inwardly into the tubular heater/continuous-flow water pipe assembly, and that a fusible safety device (13) is disposed at the outwardly projecting end of the bridge (6).

3. A continuous-flow heater according to claims 1 to 2, characterized in that the fusible safety device (13) is disposed in close proximity to the tubular heater (1), and the thermostat (12) is disposed at a greater distance from said tubular heater on the bridge member (6).

4. A continuous-flow heater according to any one of claims 1 to 3, characterized in that the sheet metal strip forming the bridge member (6) is disposed at the assembly consisting of the continuous-flow water pipe (4) and the tubular heater (1) at about the mid-point between the two connecting ends (2, 3) of the tubular heater (1).

**Revendications**

1. Chauffe-eau électrique pour appareils ménagers, notamment pour machines à café, consistant en une boucle de chauffage tubulaire (1) et un arc tubulaire pour le passage de l'eau (4) qui sont fixés à une plaque chauffante ou une tôle de montage et un pont (6) en forme d'une bande de tôle qui est en contact aussi bien avec le corps de chauffe tubulaire (1) qu'avec le tube de passage de l'eau (4) et un dispositif de limitation de la température comportant au moins deux éléments de limitation du courant ou éléments fusibles (12, 13) travaillant indépendamment l'un de l'autre, caractérisé en ce que le pont (6) enserre l'arc tubulaire pour le passage de l'eau (4) et la boucle de chauffage tubulaire (1) en un point dans la direction longitudinale de cette dernière et que l'un des éléments de limitation du courant ou élément fusible (12) est prévu à une extrémité du pont (6) et que l'autre élément de limitation du courant ou élément fusible (13) est disposé sur le côté du pont (6) faisant face à l'ensemble tube de passage d'eau/corps de chauffe tubulaire et que le pont se trouve, par ailleurs, en conduction thermique avec la tôle de support ou de montage.

2. Chauffe-eau selon la revendication 1, caractérisé en ce que à l'extrémité du pont (6) dépassant vers l'intérieur l'ensemble corps de chauffe tubulaire/tube de passage d'eau, un thermostat (12) est prévu et qu'à l'extrémité du pont (6) dépassant vers l'extérieur un fusible (13) est prevu.

3. Chauffe-eau selon les revendications 1 à 2, caractérisé en ce que le fusible (13) est disposé à proximité immédiate du corps de chauffe tubulaire (1) et que le thermostat (12) est disposé à une distance plus grande du thermostat sur le pont (6).

4. Chauffe-eau selon l'une des revendications 1 a 3, caractérisé en ce que les bandes de tôle formant le pont (6) sont fixées à l'ensemble consistant dans le tube de passage d'eau (4) et le corps de chauffe tubulaire (1) à peu près au milieu entre les deux extrémités de raccordement (2, 3) du corps de chauffe tubulaire (1).

FIG. 2

FIG. 1

0 122 414